# EUROPÄISCHE PATENTSCHRIFT

(11) **EP 0 412 079 B1**
(45) Veröffentlichungstag und Bekanntmachung des Hinweises auf die Patenterteilung: **27.07.1994**
(21) Anmeldenummer: 88903806.3
(22) Anmeldetag: 20.04.1988
(51) Int. Cl.: B01D 39/06, B01D 39/20, B01J 32/00, B01J 39/00, B01J 41/00

(54) **FILTERMEDIUM FÜR EIN TECHNISCHES FILTER**
FILTERING MEDIUM FOR TECHNICAL FILTERS
SUBSTANCE DE FILTRAGE POUR FILTRE TECHNIQUE

(43) Veröffentlichungstag der Anmeldung: 13.02.1991
(73) Patentinhaber: Ewers, Rolf, Prof. Dr. Dr., A-1160 Wien (AT)
(72) Erfinder: EWERS, Rolf, A-1160 Wien (AT); KASPERK, Christian, D-2300 Kiel 1 (DE); SIMONS, Bruno, D-2300 Kiel 14 (DE)
(74) Vertreter: Weber, Otto Ernst, Dipl.-Phys.
(86) Internationale Anmeldenummer: EP8800334
(87) Internationale Veröffentlichungsnummer: WO8910179

(56) Entgegenhaltungen:
- US-A- 3 929 971

## Beschreibung

Die Erfindung betrifft ein Filtermedium für ein technisches Filter zur chemischen und/oder physikalischen Stofftrennung unter Beteiligung fester, flüssiger und/oder gasförmiger Stoffe.

Filtermedien und Filterprozesse spielen in der Technik und insbesondere in der Verfahrenstechnik eine große Rolle. Insbesondere werden in der Trenn-Technik Filter verschiedenster Art verwendet, um Stoffe voneinander zu trennen, die in einer festen, flüssigen oder gasförmigen Phase vorliegen und in einer beliebigen Kombination miteinander vermischt sein können. Beispielsweise kann die Abscheidung von festen Partikeln aus einer Gasströmung durch ein poröses Medium dadurch erfolgen, daß die Partikeln unter der Wirkung verschiedener Mechanismen wie Diffusion, Trägheitskräfte, Schwerkraft, elektrostatische Kräfte oder dergleichen zu den Kollektor-Oberflächen transportiert und dort durch Haftkräfte festgehalten werden. Außer diesen Vorgängen können bei der Filterung, für welche der Erfindungsgegenstand anwendbar ist, auch chemische Reaktionen ablaufen, um beispielsweise selektiv einen bestimmten Stoff oder mehrere bestimmte Stoffe aus einem vorgegebenen Ausgangsstoff zu entfernen.

Weiterhin können auch thermische Reaktionen bei der Stofftrennung eine Rolle spielen. Die Grenzflächen vieler fester Phasen besitzen selektive Eigenschaften, die sich für die Trennung fluider Phasen ausnutzen lassen. Bei einer Gruppe von Trennverfahren dieser Art besteht die selektive Wirkung von Grenzflächen darin, daß sich dort bestimmte Komponenten anreichern. Die darauf basierenden Trennverfahren sind die Adsorption und der Ionenaustausch. Bei solchen Adsorptionsverfahren kann es zweckmäßig sein, einen Hilfsstoff (Adsorptionsmittel, Ionenaustauscher) zu verwenden, der aus an sich bekannten Gründen eine möglichst große spezifische Oberfläche aufweisen sollte. Um die Adsorption möglichst effektiv zu gestalten, d.h. eine möglichst starke selektive Anreicherung bestimmter Stoffe aus gasförmigen oder flüssigen Mischungen an der Oberfläche fester Hilfsstoffe zu erreichen, ist es von Bedeutung, die Oberfläche möglichst groß zu gestalten. Dies gelingt bei den bisher bekannten Hilfsstoffen in der Regel dadurch, daß stark poröse Stoffe verwendet werden.

Es sind bereits eine Reihe von porösen Stoffen bekannt, die als Filtermedium eingesetzt werden, insbesondere Aktivkohle, Aluminiumoxidgel, Silicagel sowie bestimmte Alumosilikate.

Es ist ferner aus der US-A-3,929,971 ein Hydroxylapatit-Material bekannt, welches aus dem Skelett von Korallen als Ausgangsmaterial hergestellt ist. Die Porengröße dieses Materials liegt im Bereich von 5 bis 15 Mikrometern, so daß es für Filter mit geringer Porengröße und großer spezifischer Oberfläche nicht geeignet ist.

Der Erfindung liegt die **Aufgabe** zugrunde, ein weiteres Filtermedium bereitzustellen, welches bei guten Filtereigenschaften zugleich aus einem in ausreichendem Maß auf der Erde vorhandenen Rohstoff besonders umweltfreundlich und einfach herstellbar ist und eine derartige Porosität aufweist, daß sich besonders vielseitige Anwendungsmöglichkeiten in der Filtertechnik ergeben.

Diese Aufgabe wird gemäß dem kennzeichnenden Teil des Anspruchs 1 gelöst. Bevorzugte Weiterbildungen der Erfindung sind in den Unteransprüchen beschrieben.

Die Erfindung bedient sich somit der Erkenntnis, daß die Erfindungsaufgabe einer Lösung zugeführt werden kann durch die Verwendung von porösem Hydroxylapatit-Material aus dem Grundskelett von kalkinkrustierenden Algen in der chemischen und/oder mechanischen Verfahrenstechnik als Filtermedium für technische Filter.

Gemäß der Erfindung ist der überraschende und wesentliche Vorteil erreichbar, daß ein hochwirksames Filtermedium aus einem Rohstoff gewonnen werden kann, der in praktisch unerschöpflicher Menge zur Verfügung steht und mit verhältnismäßig geringem technischem und finanziellem Aufwand aufbereitet werden kann. Es kommt vorteilhaft hinzu, daß Algen in relativ kurzer Zeit nachwachsen, wenn sie in bestimmten Bereichen abgebaut werden. Die Erfindung leistet daher insbesondere einen wertvollen Beitrag dazu, ein wertvolles und spezielles technisches Produkt auf eine in jeder Hinsicht umweltfreundliche Art und Weise zur Verfügung zu stellen.

Weiterhin läßt sich gemäß der Erfindung die Porosität des vorteilhaft gewonnenen Hydroxylapatit-Materials in verhältnismäßig weiten Grenzen bei der Aufbereitung gezielt steuern, um für verschiedenste Anwendungsfälle eine jeweils optimale Porengröße zu erreichen.

Eine vorteilhafte Ausführungsform des Erfindungsgegenstandes sieht vor, daß das Filtermedium im wesentlichen aus dem gemäß der vorliegenden Erfindung erhaltenen porösen Hydroxylapatit-Material besteht. Es kann also im Rahmen der Erfindung dieses derart gewonnene Hydroxylapatit-Material sowohl in Verbindung mit anderen Filtermaterialien als auch ohne anderweitige Stoffe als reines Hydroxylapatit-Material verwendet werden. Im Bedarfsfalle ist es auch möglich, praktisch absolut reines Hydroxylapatit-Material als Filtermedium zu verwenden, wenn dies aus technischen, hygienischen oder sonstigen Gründen erforderlich sein sollte.

In vielen Fällen ist es vorteilhaft, daß das Filtermedium als Filtergranulat ausgebildet ist.

Falls technische Filterprobleme dies zweckmäßig erscheinen lassen, kann gemäß der Erfindung auch vorgesehen sein, daß das Filtermedium als Filterblock mit vorgebbarer Kontur ausgebildet ist.

Die Wirksamkeit des Filtervorganges kann in vielen Fällen dadurch noch verbessert werden, daß die Oberfläche des Hydroxylapatit-Materials mit einem für die vorgegebene Trennreaktion als Katalysator wirksamen Stoff beschichtet ist.

Wenn es erwünscht ist, zur Abtrennung, Anreicherung und Gewinnung gelöster Bestandteile aus Elektrolytlösungen Filter zu verwenden, sieht die Erfindung vorzugsweise vor, daß die Oberfläche des Hydroxylapatit-Materials mit einem Ionenaustauscher beschichtet ist. Eine wichtige Anwendung in diesem Bereich ist die Wasseraufbereitung.

Weiterhin ist die Erfindung insbesondere auch bei der Abgasreinigung vorteilhaft anwendbar. Durch die hohe Belastung der Luft mit Schadstoffen kommt der Reinigung von Abgasen eine immer stärkere Bedeutung zu, welche von Industrieanlagen und von Kraftfahrzeugen ausgestoßen werden. Somit leistet die Erfindung auch dadurch einen erheblichen Beitrag zur Reduzierung der Umweltverschmutzung, daß ein erfindungsgemäßes Filtermedium besonders vorteilhaft im Katalysator zur Reinigung von Abgasen aus Kraftfahrzeugen verwendet werden kann. In diesem Zusammenhang erweist es sich als besonders vorteilhaft, daß das erfindungsgemäße Filtermedium bei interkonnektierender Porosität eine erhebliche Rauhigkeit der Oberfläche und eine entsprechend große spezifische Oberfläche aufweist.

Zur Herstellung des Hydroxylapatit-Materials können gemäß der Erfindung sämtliche Algen, insbesondere des Eu- und Sublitorals der Weltmeere, insbesondere Spezies der Corallinaceae wie Corallina officinalis, Corallina rubens, Lithotamnion calcarum und Spezies der Codiaceae, z.B. Halimeda spec., einschließlich benthisch-krustenförmiger Algen, wie Lithothamnion spec. und Lithophyllum spec., verwendet werden, die überhaupt Kalk inkrustieren, sei es auch nur geringfügig.

Um das Kalkskelett der Algen zu erhalten, müssen die organischen Bestandteile der Algen zunächst entfernt werden. Dies kann durch sogenannte "Mazeration" erfolgen. Hierzu kann beispielsweise vitales oder getrocknetes Algenmaterial durch Kupferkomplexsalze, z.B. Schweizer's Reagens oder mit Lithiumchlorid oder -bromidlösungen behandelt werden, oder es kann eine Pyrolyse durchgeführt werden. Solche Mazerationsverfahren, d.h. Arbeitsweisen zur Entfernung des organischen Materials sind in der US-A-3 929 971 beschrieben, z.B. das Eintauchen in verdünnte Natriumhypochloritlösungen.

Nach der Mazeration mittels Schweizer's Reagens oder Lithiumchloridlösung oder nach einer Pyrolyse wird das von organischer Substanz restlos befreite Calciumkarbonatgrundmaterial, das in Form eines Granulats vorliegt, gründlich mit destilliertem Wasser gewaschen. Die Korngröße des Materials liegt zwischen 0,1 und 2 mm.

Das aus den Algen gewonnene, calciumreiche Grundskelett wird dann in an sich bekannter Weise in Hydroxylapatit umgewandelt. Diese Umwandlung in Hydroxylapatit erfolgt üblicherweise nach einem hydrothermischen Verfahren unter Anwendung eines Phosphatsalzbades. Hierzu können Alkalimetallphosphate, wie Natriumorthophosphat, Kaliumorthophosphat und Ammoniumorthophosphat, saure Phosphate und Mischphosphate verwendet werden. Ebenfalls kann Orthophosphorsäure hierzu verwendet werden. Diese hydrothermale Behandlung zur Umwandlung von Calciumcarbonat in Hydroxylapatit ist ebenfalls in der zuvor genannten US-A-3 292 971 beschrieben. Die hydrothermale Behandlung wird in üblicher Weise bei erhöhtem Druck und erhöhter Temperatur durchgeführt.

Ein Beispiel für eine solche Behandlung besteht darin, die porösen, mazerierten Granula aus kalkinkrustierenden Algen mit Natriumhydrogenphosphat und bidestilliertem Wasser in einem Verhältnis 1:1:4 in einem geschlossenen Behälter für zwei bis drei Tage unter folgenden Bedingungen zu halten:
a) 300°C und 500 bar oder
b) 600°C und 1.000 bar.

Nach der hydrothermalen Behandlung liegt das Hydroxylapatit-Material üblicherweise in Granulatform vor. Aus dieser Granulatform können kompakte Stücke durch Agglomeration, z.B. durch übliche Sinterverfahren, gegebenenfalls unter Anwendung von Druck und unter Zusatz üblicher Sinterhilfsmittel hergestellt werden.

Zur Agglomeration des Granulats zu kompakten Stücken werden diese zunächst zu Formkörpern gepreßt und diese dann nach einer etwa vierstündigen Vorwärmphase bei einer Temperatur von 1.000 bis 1.400°C während vier bis fünf Stunden gebrannt, anschließend wird z.B. wahrend vier bis fünf Stunden abgekühlt. Zur bewußten Beeinflussung der Porengröße des Hydroxylapatitkörpers nach Sinterung wird die Sinterung unter Zugabe empirisch ermittelter Mengen H₂O (bidest.) durchgeführt.

## Patentansprüche

1. Filtermedium für ein technisches Filter zur chemischen und/oder physikalischen Stofftrennung, unter Beteiligung fester, flüssiger und/oder gasförmiger Stoffe,
dadurch **gekennzeichnet,**
daß das Filtermedium ein aus dem Grundskelett kalkinkrustierender Algen erhaltenes poröses Hydroxylapatit-Material aufweist.

2. Filtermedium nach Anspruch 1,
dadurch **gekennzeichnet,**
daß das Filtermedium im wesentlichen aus dem porösen Hydroxylapatit-Material besteht.

3. Filtermedium nach einem der Ansprüche 1 oder 2,
dadurch **gekennzeichnet,**
daß das Filtermedium als Filtergranulat ausgebildet ist.

4. Filtermedium nach einem der Ansprüche 1 oder 2,
dadurch **gekennzeichnet,**
daß das Filtermedium als Filterblock mit vorgebbarer Kontur ausgebildet ist.

5. Filtermedium nach einem der vorhergehenden Ansprüche,
dadurch **gekennzeichnet,**
daß die Oberfläche des Hydroxylapatit-Materials mit einem für die vorgegebene Trennreaktion als Katalysator wirksamen Stoff behandelt ist.

6. Filtermedium nach einem der vorhergehenden Ansprüche,
dadurch **gekennzeichnet,**
daß die Oberfläche des Hydroxylapatit-Materials mit einem Ionenaustauscher behandelt ist.

7. Verwendung von porösem Hydroxylapatit-Material aus dem Grundskelett von kalkinkrustierenden Algen in der chemischen und/oder mechanischen Verfahrenstechnik als Filtermedium für technische Filter.

8. Verwendung von porösem Hydroxylapatit-Material nach Anspruch 7,
dadurch **gekennzeichnet,**
daß das poröse Hydroxylapatit-Material unter Ausnutzung seiner interkonnektierenden Porosität für die Trennung fluider Phasen verwendet wird.

## Claims

1. Filter medium for a technical filter for chemical and/or physical separation of components from solid, fluid and/or gaseous substances,
**characterized** in that
the filter medium contains a porous hydroxyl apatite material obtained from the basic skeleton of a lime-encrusting algae.

2. Filter medium according to claim 1,
**characterized** in that
the filter medium essentially consists of a porous hydroxyl apatite material.

3. Filter medium according to claim 1 or 2,
**characterized** in that
the filter medium is in the form of filter granules.

4. Filter medium according to claim 1 or 2,
**characterized** in that
the filter medium is built up as a filter block with preformed contours.

5. Filter medium according to one of the preceding claims,
**characterized** in that
the upper surface of the hydroxyl apatite material is treated with a catalytically active material for the predetermined separation reaction.

6. Filter medium according to one of the preceding claims,
**characterized** in that
the upper surface of the hydroxyl apatite material is treated with an ion exchanger.

7. Use of a porous hydroxyl apatite material formed from the basic skeletons of lime-encrusting algae in chemical and/or mechanical process technology as a filter medium for a technical filter.

8. Use of a porous hydroxyl apatite material according to claim 7,
**characterized** in that
the porous hydroxyl apatite material by virtue of its interconnected porosity is used for the separation of fluid phases.

## Revendications

1. Matériau filtrant pour un filtre technique à séparation chimique et/ou physique de matières accompagniées de substances solides, liquides et/ou gazeuses, **caractérisé en ce que** le matériau filtrant comporte un matériau poreux d'hydroxylapatite obtenu d'un squelette à base de algues incrustantes à chaux.

2. Matériau filtrant selon la revendication 1, **caractérisé en ce que** le matériau filtrant consiste sensiblement dudit matériau poreux d'hydoxylapatite.

3. Matériau filtrant selon l'une quelconque des revendication 1 ou 2, **caractérisé en ce que** le matériau filtrant est pourvu en forme d'un granulat filtrant.

4. Matériau filtrant selon l'une quelconque des revendication 1 ou 2, **caractérisé en ce que** le matériau filtrant est pourvu d'un filtre en forme d'un bloc ayant un contour déterminable.

5. Matériau filtrant selon l'une quelconque des revendication précédentes, **caractérisé en ce que** la surface du matériau d'hydroxylapatite est traitée d'un agent formant catalysateur pour la réaction de séparation donnée.

6. Matériau filtrant selon l'une quelconque des revendication précédentes, **caractérisé en ce que** la surface du matériau d'hydroxylapatite est traité d'un agent échangeur de iones.

7. Utilisation d'un matériau poreux d'hydroxylapatite, constitué d'un squelette à base de algues incrustantes à chaux, formant matériau filtrant pour filtres techniques dans l'engineering chimique et/ou mécanique.

8. Utilisation de matériau poreux d'hydroxylapatite selon la revendication 7, **caractérisée en ce qu**' on utilise le matériau poreux d'hydroxylapatite en profitant de sa porosité interconnectante pour la séparation de phases fluides.
